# EUROPEAN PATENT SPECIFICATION

(11) **EP 2 876 129 B1**
(45) Date of publication and mention of the grant of the patent: **12.05.2021**
(21) Application number: 14194566.7
(22) Date of filing: 24.11.2014
(51) Int. Cl.: C08G 73/10, G02F 1/1335

(54) **Composition for preparing polyimide, polyimide, and article including same**
Zusammensetzung zur Herstellung von Polyimid, Polyimid und Artikel damit
Composition pour la préparation d'un polyimide, un polyimide et article comprenant ladite composition

(30) Priority: 25.11.2013 KR 20130144125; 20.11.2014 KR 20140162857
(43) Date of publication of application: 27.05.2015
(73) Proprietor: Samsung Electronics Co., Ltd., Gyeonggi-do 443-742 (KR)
(72) Inventor: Chae, Jungha, Gyeonggi-do, (KR); Sohn, Byung Hee, Gyeonggi-do, (KR)
(74) Representative: Elkington and Fife LLP

(56) References cited:
- EP-A1- 2 597 111
- WO-A1-2012/024009
- JP-A- H08 224 843
- US-A1- 2002 090 524
- US-A1- 2014 023 847

## Description

### FIELD OF THE INVENTION

This disclosure relates to a composition for preparing a polyimide, a polyimide prepared from the composition, and an article including the polyimide.

### BACKGROUND OF THE INVENTION

Polyimide film is non-soluble film, which is resistant to high-temperatures, and does not oxidize upon exposure to heat. It is also resistant to radiation, low temperature and thus is suitable for application in a wide variety of heat-resistant high-tech materials for vehicle, aerospace, spaceship, electronic materials, such as insulating coating, insulating film, semiconductor, electrode protecting layer for thin film transistor-liquid crystal display (TFT-LCD), etc.

Glass has been widely used for the substrates for liquid crystal display, organic electro luminescent display devices, organic TFT, etc. However, flexible substrates have been researched in accordance with the need for lightness and flexibility of the substrates. There remains a need in high transparency, low thermal expansion, high heat resistance, low optical anisotropy materials that are desired for the flexible substrates for replacing glass.

EP 2 597 111 discloses a co-polyimide precursor for producing a polyimide having high transparency.

US 2014/023847 discloses a polyimide film, as well as a polyimide laminate-metal laminate in which the polyimide film and a metal layer are laminated.

WO 2012024009 discloses a light emitting diode assembly and a thermal control blanket.

US 2002/090524 discloses a metal film/aromatic polyimide film laminate which is composed of a composite aromatic polyimide film and a metal film.

JP H08 224843 discloses a multilayer aromatic polyimide film.

### SUMMARY OF THE INVENTION

It has been discovered that transparent polyimide film may be used as a flexible substrate.

An embodiment relates to a composition for preparing a polyimide having high temperature stability, high transparency, and low optical anisotropy.

Another embodiment relates to a polyimide having high temperature stability, high transparency, and low optical anisotropy.

Yet another embodiment relates to an article having high temperature stability, high transparency, and low optical anisotropy.

Still another embodiment relates to an optical device including an article having high temperature stability, high transparency, and low optical anisotropy.

According to an embodiment, provided is a composition for preparing a polyimide including a tetracarboxylic dianhydride mixture in accordance with claim 1.

The tetracarboxylic acid dianhydride represented by Chemical Formula 5 may be 3,3',4,4'-biphenyltetracarboxylic dianhydride.

The tetracarboxylic acid dianhydride represented by Chemical Formula 7 may be 2,3,3',4'-biphenyltetracarboxylic dianhydride.

In the composition, the tetracarboxylic dianhydrides mixture and the 2,2'-bis(trifluoromethyl)benzidine may be present in a mole ratio of 1:1.

According to another embodiment, provided is a polyimide or a polyamic acid precursor of the polyimide in accordance with claim 3.

The group 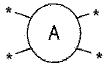 may be represented by Chemical Formula 15:

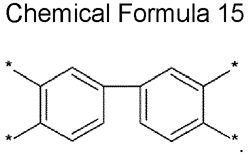

The group 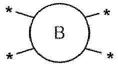 may be represented by Chemical Formula 16:

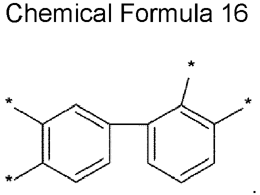

The group 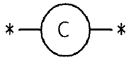 may be represented by Chemical Formula 17:

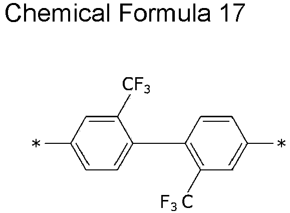

According to yet another embodiment, provided is an article prepared from the composition or from the polyimide.

The article may be a film, a fiber, a coating material, or an adhesive.

In an embodiment, the article may be a film, wherein the thickness of the film may be about 10 micrometers, and the out-of-plane retardation of the film may be less than or equal to 700 nanometers.

In another embodiment, the article may be a film, wherein the thickness of the film may be about 10 micrometers, and the yellowness index of the film may be less than 4%.

The article may have a transmittance for light of greater than or equal to about 80% at a wavelength of about 430 nanometers.

The article may have a yellowness index (YI) of less than about 4%.

The article may have an out-of-plane retardation of less than or equal to about 700 nanometers.

According to still another embodiment, provided is a display device including the article.

The display device may be a liquid crystal display device, an organic light emitting device, or a complementary metal-oxide semiconductor.

Hereinafter, further embodiments will be described in detail.

### BRIEF DESCRIPTION OF THE DRAWINGS

The above and other aspects, advantages and features of this disclosure will become more apparent by describing in further detail exemplary embodiments thereof with reference to the accompanying drawings, in which:

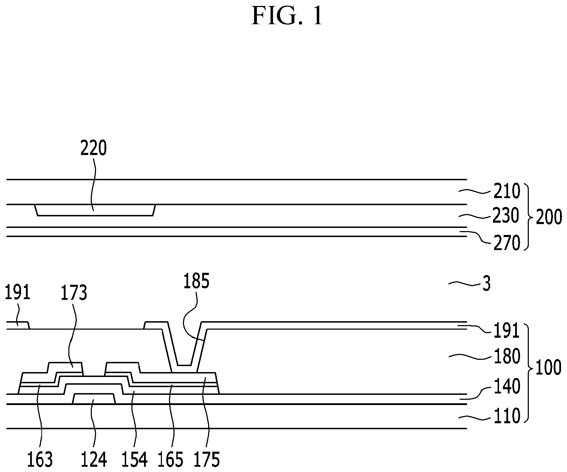

FIG. 1 is a cross-sectional view of a liquid crystal display (LCD) in accordance with an embodiment.

### DETAILED DESCRIPTION OF THE EMBODIMENTS

This disclosure will be described more fully hereinafter with reference to the accompanying drawings, in which some but not all embodiments are shown. In addition, dimensional ratios in the drawings may be exaggerated and different from actual ratios for ease of explanation. This disclosure may, however, be embodied in many different forms and is not to be construed as limited to the exemplary embodiments set forth herein. Rather, these embodiments are provided so that this disclosure will fully convey the scope of the invention to those skilled in the art. Thus, in some exemplary embodiments, well-known technologies are not specifically explained to avoid ambiguous understanding of the present inventive concept. Unless otherwise defined, all terms used in the specification (including technical and scientific terms) may be used with meanings commonly understood by a person having ordinary knowledge in the art. Further, unless explicitly defined to the contrary, the terms defined in a generally-used dictionary are not ideally or excessively interpreted.

It will be understood that when an element is referred to as being "on" another element, it may be directly on the other element or intervening elements may be present therebetween. In contrast, when an element is referred to as being "directly on" another element, there are no intervening elements present.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer, or section. Thus, a first element, component, region, layer, or section discussed below could be termed a second element, component, region, layer, or section without departing from the teachings of the present embodiments.

The terminology used herein is for the purpose of describing particular embodiments only and is not intended to be limiting. As used herein, the singular forms "a," "an" and "the" are intended to include the plural forms as well, unless the context clearly indicates otherwise. The term "or" means "and/or." As used herein, the term "and/or" includes any and all combinations of one or more of the associated listed items. Expressions such as "at least one of," when preceding a list of elements, modify the entire list of elements and do not modify the individual elements of the list.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

As used herein, the term "mixture" is inclusive of all types of combinations, including blends, alloys, solutions, and the like.

As used herein, when a specific definition is not otherwise provided, the term "substituted" refers to a group or compound substituted with at least one substituent including a halogen (F, Br, Cl, or I), a hydroxyl group, a nitro group, a cyano group, an amino group (NH2, NH(R¹⁰⁰) or N(R¹⁰¹)(R¹⁰²), wherein R¹⁰⁰, R¹⁰¹, and R¹⁰² are the same or different, and are each independently a C1 to C10 alkyl group, an amidino group, a hydrazine group, a hydrazone group, a carboxyl group, an ester group, a ketone group, a substituted or unsubstituted alkyl group, a substituted or unsubstituted alicyclic organic group, a substituted or unsubstituted aryl group, a substituted or unsubstituted alkenyl group, a substituted or unsubstituted alkynyl group, a substituted or unsubstituted heteroaryl group, and a substituted or unsubstituted heterocyclic group, in place of at least one hydrogen of a functional group, or the substituents may be linked to each other to provide a ring.

As used herein, when a specific definition is not otherwise provided, the term "alkyl group" refers to a C1 to C30 alkyl group, for example, a C1 to C15 alkyl group, the term "cycloalkyl group" refers to a C3 to C30 cycloalkyl group, for example, a C3 to C18 cycloalkyl group, the term "alkoxy group" refer to a C1 to C30 alkoxy group, for example, a C1 to C18 alkoxy group, the term "alkylcarboxy group" refers to a C2 to C30 alkylcarboxy group, for example, a C2 to C18 alkylcarboxy group, the term "alkoxycarbonyl group" refers to a C2 to C30 alkoxycarbonyl group, for example, a C2 to C18 alkoxycarbonyl group, the term "alkanoyl group" refers to a C2 to C30 alkanoyl group, for example, a C2 to C18 alkanoyl group, the term "aryl group" refers to a C6 to C30 aryl group, and for example, a C6 to C18 aryl group, the term "alkenyl group" refers to a C2 to C30 alkenyl group, for example a C2 to C18 alkenyl group, the term "alkynyl group" refers to a C2 to C30 alkynyl group, for example, a C2 to C18 alkynyl group, the term "alkylene group" refers to a C1 to C30 alkylene group, for example a C1 to C18 alkylene group, and the term "arylene group" refers to a C6 to C30 arylene group, for example, a C6 to C16 arylene group.

As used herein, when a specific definition is not otherwise provided, the term "aliphatic" refers to a C1 to C30 alkyl group, a C2 to C30 alkenyl group, a C2 to C30 alkynyl group, a C1 to C30 alkylene group, a C2 to C30 alkenylene group, or a C2 to C30 alkynylene group, for example, a C1 to C15 alkyl group, a C2 to C15 alkenyl group, a C2 to C15 alkynyl group, a C1 to C15 alkylene group, a C2 to C15 alkenylene group, or a C2 to C15 alkynylene group, the term "alicyclic organic group" refers to a C3 to C30 cycloalkyl group, a C3 to C30 cycloalkenyl group, a C3 to C30 cycloalkynyl group, a C3 to C30 cycloalkylene group, a C3 to C30 cycloalkenylene group, or a C3 to C30 cycloalkynylene group, for example, a C3 to C15 cycloalkyl group, a C3 to C15 cycloalkenyl group, a C3 to C15 cycloalkynyl group, a C3 to C15 cycloalkylene group, a C3 to C15 cycloalkenylene group, or a C3 to C15 cycloalkynylene group.

As used herein, when a definition is not otherwise provided, the term "aromatic organic group" refers to a C6 to C30 group comprising one aromatic ring, two or more aromatic rings fused together to provide a condensed ring system, or two or more moieties independently selected from the foregoing (a single aromatic ring or a condensed ring system) linked through a single bond or through a functional group selected from a fluorenylene group, O, S, C(=O), CH(OH), S(=O)₂, Si(CH₃)₂, (CH₂)ₚ wherein 1≤p≤10, (CF₂)_{q} wherein 1≤q≤10, C(CH₃)₂, C(CF₃)₂, and C(=O)NH, for example, through S(=O)₂. A non-limiting example of "aromatic organic group" may be a C6 to C30 aryl group or a C6 to C30 arylene group, for example, a C6 to C16 aryl group or a C6 to C16 arylene group such as phenylene.

As used herein, when a specific definition is not otherwise provided, the term "heterocyclic group" refers to a C2 to C30 cycloalkyl group, a C2 to C30 cycloalkylene group, a C2 to C30 cycloalkenyl group, a C2 to C30 cycloalkenylene group, a C2 to C30 cycloalkynyl group, a C2 to C30 cycloalkynylene group, a C2 to C30 heteroaryl group, or a C2 to C30 heteroarylene group including 1 to 3 heteroatoms selected from O, S, N, P, Si, and a combination thereof in one ring, for example, a C2 to C15 cycloalkyl group, a C2 to C15 cycloalkylene group, a C2 to C15 cycloalkenyl group, a C2 to C15 cycloalkenylene group, a C2 to C15 cycloalkynyl group, a C2 to C15 cycloalkynylene group, a C2 to C15 heteroaryl group, or a C2 to C15 heteroarylene group including 1 to 3 heteroatoms selected from O, S, N, P, Si, and a combination thereof, in one ring.

As used herein, when a definition is not otherwise provided, the term "alkyl" indicates a group derived from a completely saturated, branched or unbranched (or a straight or linear) hydrocarbon and having a specified number of carbon atoms.

As used herein, when a definition is not otherwise provided, the term "alkoxy" represents "alkyl-O-", wherein the term "alkyl" has the same meaning as described above.

As used herein, when a definition is not otherwise provided, the term "fluoroalkyl" indicates a group derived from a completely saturated, branched or unbranched (or a straight or linear) hydrocarbon including at least one fluorine atom and having a specified number of carbon atoms.

As used herein, when a definition is not otherwise provided, the term "heteroalkyl" indicates a group derived from a completely saturated, branched or unbranched (or a straight or linear) hydrocarbon wherein one or more of the carbon atoms are replaced with a heteroatom selected from O, S, N, P, and Si and having a specified number of carbon atoms.

As used herein, when a definition is not otherwise provided, the term "alkanoyl" represents "alkyl-C(=O)-", wherein the term "alkyl" has the same meaning as described above.

As used herein, when a definition is not otherwise provided, the term "alkylcarboxy" represents "alkyl-C(=O)O-", wherein the term "alkyl" has the same meaning as described above.

As used herein, when a definition is not otherwise provided, the term "alkoxycarbonyl" represents "alkyl-OC(=O)-", wherein the term "alkyl" has the same meaning as described above.

As used herein, the term "cycloalkyl group" refers to a monovalent group having one or more saturated rings in which all ring members are carbon and having a specified number of carbon atoms.

As used herein, the term "heterocycloalkyl group" refers to a cycloalkyl group as defined above, wherein one or more of the ring carbon atoms are replaced with a heteroatom selected from O, S, N, P, and Si and having a specified number of carbon atoms.

As used herein, the term "cycloalkoxy group" refers to "cycloalkyl-O-", wherein the term "cycloalkyl" has the same meaning as described above.

As used herein, when a definition is not otherwise provided, the term "aryl" group, which is used alone or in combination, indicates an aromatic hydrocarbon group containing at least one ring and having a specified number of carbon atoms. The term "aryl" is construed as including a group with an aromatic ring fused to at least one cycloalkyl ring.

As used herein, the term "aryloxy group" refers to "aryl-O-", wherein the term "aryl" has the same meaning as described above.

As used herein, when a definition is not otherwise provided, the term "heteroaryl" group, which is used alone or in combination, refers to an aryl group, wherein one or more carbon atoms is (are) substituted with a heteroatom selected from nitrogen (N), oxygen (O), phosphorus (P), and sulfur (S) and having a specified number of carbon atoms.

As used herein, when a definition is not otherwise provided, the term "alkylene" indicates a divalent group respectively derived from the "alkyl" group.

As used herein, when a definition is not otherwise provided, the term "fluoroalkylene" indicates a divalent group respectively derived from the "fluoroalkyl" group.

As used herein, when a definition is not otherwise provided, the term "heteroalkylene" indicates a divalent group respectively derived from the "heteroalkyl" group.

As used herein, when a definition is not otherwise provided, the term "cycloalkylene" indicates a divalent group respectively derived from the "cycloalkyl" group.

As used herein, when a definition is not otherwise provided, the term "heterocycloalkylene" indicates a divalent group respectively derived from the "heterocycloalkyl" group.

As used herein, when a definition is not otherwise provided, the term "arylene" indicates a divalent group respectively derived from the "aryl" group.

As used herein, when a definition is not otherwise provided, the term "heteroarylene" indicates a divalent group respectively derived from the "heteroaryl" group.

In addition, in the specification, the mark "*" may refer to a point of attachment to another atom, group, or unit.

Polyimide film refers to a high-temperature resistant film of polyimide, which is prepared by polymerizing an aromatic dianhydride and an aromatic diamine or an aromatic diisocyanate in a solution state to obtain a polyamic acid derivative, and by imidizing the polyamic acid derivative by dehydrative cyclization. However, the polyimides have yellow colors due to high aromatic ring content, which causes low transmittance at visible regions and high birefringence, thus making it difficult for the polyimides to be used as an optical element. Therefore, a polyimide having a low coefficient of thermal expansion, high heat-resistance, low optical anisotropy, i.e., low out-of-plane retardation (Rₜₕ), and high transmittance for light is still desired.

According to an embodiment, provided is a composition for preparing a polyimide including a tetracarboxylic dianhydride mixture including
a tetracarboxylic dianhydride represented by Chemical Formula 5,
a tetracarboxylic dianhydride represented by Chemical Formula 7, and
2,2'-bis(trifluoromethyl)benzidine:

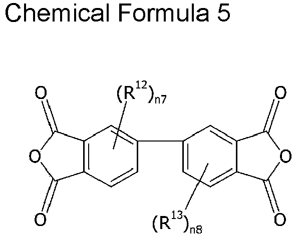

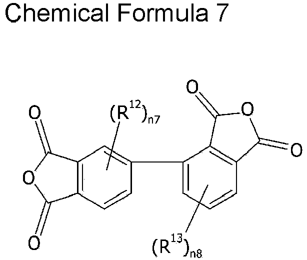

In Chemical Formulae 5 and 7,
R¹² and R¹³ are the same or different and are independently a halogen, a hydroxyl group, a substituted or unsubstituted C1 to C10 aliphatic organic group, a substituted or unsubstituted C6 to C20 aromatic organic group a group of formula -OR²⁰⁰, wherein R²⁰⁰ is a C1 to C10 aliphatic organic group, or a silyl group of formula -SiR²⁰¹R²⁰²R²⁰³, wherein R²⁰¹, R²⁰², and R²⁰³ are the same or different and are independently a hydrogen or a C1 to C10 aliphatic organic group, and
n7 and n8 are the same or different and are independently an integer ranging from 0 to 3.

The composition according to an embodiment includes a tetracarboxylic dianhydride having a planar structure represented by Chemical Formula 5, as well as a tetracarboxylic dianhydride having a tilted (or folded) dihedral structure represented by Chemical Formula 7. It has been unexpectedly discovered that the polyimide prepared from the composition has difficulty in forming a chain alignment among the polymer chains. This property makes it difficult for the polyimide to form a charge transfer complex among chains, and results in the polyimide having a low yellowness index and high transparency, as shown in the Examples. Further, the polyimide prepared from the composition may have optical anisotropic morphology due to the difficulty of making a charge transfer complex, which may result in a polyimide film having a high transmittance for light and a low out-of-plane retardation (Rₜₕ).

Therefore, the tetracarboxylic dianhydride represented by Chemical Formula 5 may include any anhydride of Chemical Formula 5 having a planar structure, and may be, for example, 3,3',4,4'-biphenyl tetracarboxylic dianhydride (BPDA).

The tetracarboxylic dianhydride represented by Chemical Formula 7 may include any anhydride of Chemical Formula 7 having a tilted dihedral structure, and may be, for example, 2,3,3',4'-biphenyltetracarboxylic dianhydride (a-BPDA).

In an embodiment, the tetracarboxylic dianhydride represented by Chemical Formula 5 may include 3,3',4,4'-biphenyl tetracarboxylic dianhydride (BPDA), and the tetracarboxylic dianhydride represented by Chemical Formula 7 may include 2,3,3',4'-biphenyltetracarboxylic dianhydride (a-BPDA).

As used herein, the tetracarboxylic dianhydride, such as the tetracarboxylic dianhydride represented by Chemical Formula 5 or Chemical Formula 7, has a planar structure when the absolute value of the dihedral angle between two dicarboxylic anhydride fragments constituting the molecule of the tetracarboxylic dianhydride is less than about 15°, for example, less than about 10°, for example, less than about 5°, and for example, less than about 1°.

As used herein, the tetracarboxylic dianhydride, such as the tetracarboxylic dianhydride represented by Chemical Formula 5 or Chemical Formula 7, has a tilted structure when the absolute value of the dihedral angle between two dicarboxylic anhydride fragments constituting the molecule of the tetracarboxylic dianhydride is greater than about 15°.

In the composition, the tetracarboxylic dianhydride represented by Chemical Formula 5 and the tetracarboxylic dianhydride represented by Chemical Formula 7 may be included at a mole ratio of about 1:99 to about 99:1, for example, at a mole ratio of about 10:90 to about 90:10, or at a mole ratio of about 20:80 to about 80:20.

The tetracarboxylic dianhydride represented by Chemical Formula 7 is included in an amount of greater than or equal to 25 mole% and less than or equal to 52 mole%, based on the total moles number in the tetracarboxylic dianhydride mixture.

Within the above ranges, an article prepared from the composition may have good optical properties, such as, for example, high transmittance for light, low yellowness index, low out-of-plane retardation (Rₜₕ), and the like, as well as good thermal properties, such as, for example, high glass transition temperature, high degradation temperature, and the like.

In a specific embodiment, any substituents on the benzene rings that are ortho to the linking single bond in Chemical formula 5 are selected so as to not significantly adversely affect the planarity of the molecule as described above. In general, small substituents are preferred, such as hydrogen or fluorine. In an embodiment, all positions ortho to the linking single bond in Chemical formula 5 are fluorine or hydrogen.

Planarity may be maximized where all substituents ortho to the linking single bond in Chemical formula 5 are hydrogen.

The composition for preparing a polyimide further comprises 2,2'-bis(trifluoromethyl)benzidine (TFDB). 2,2'-bis(trifluoromethyl)benzidine reacts with the tetracarboxylic dianhydride to form an imide.

In the composition according to an embodiment, the tetracarboxylic dianhydride and the 2,2'-bis(trifluoromethyl)benzidine may react at a mole ratio of 1:1 to prepare a polyimide.

According to another embodiment, provided is a polyimide represented by Chemical Formula 8, or a polyamic acid precursor of the polyimide:

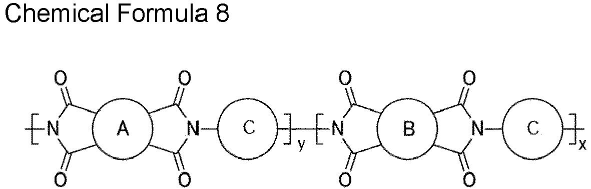

In Chemical Formula 8, 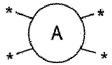 is represented by Chemical Formula 12, 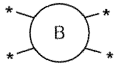 is represented by Chemical Formula 14: 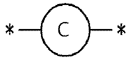 is represented by the following chemical formula:

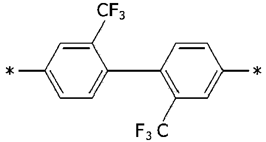

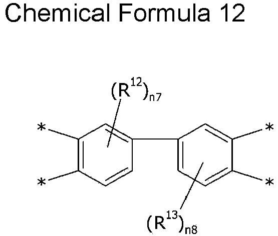

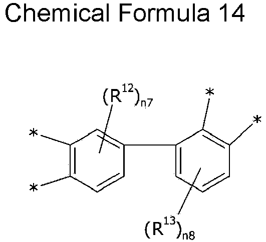

In Chemical Formulae 12 and 14, R¹² and R¹³ are the same or different and are independently a halogen, a hydroxyl group, a substituted or unsubstituted C1 to C10 aliphatic organic group, a substituted or unsubstituted C6 to C20 aromatic organic group, a group of formula -OR²⁰⁵, wherein R²⁰⁵ is a C1 to C10 aliphatic organic group, or a silyl group of formula -SiR²⁰⁹R²¹⁰R²¹¹, wherein R²⁰⁹, R²¹⁰, and R²¹¹ are the same or different and are independently a hydrogen or a C1 to C10 aliphatic organic group
n7 and n8 are the same or different and are independently an integer ranging from 0 to 3.

The group 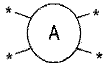 may be represented by Chemical Formula 15:

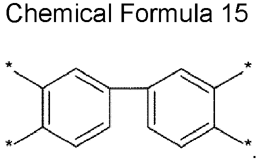

The group 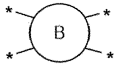 may be represented by Chemical Formula 16:

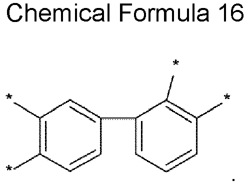

The polyimide represented by Chemical Formula 8 or a polyamic acid precursor of the polyimide may be prepared by reacting a tetracarboxylic dianhydride mixture including a tetracarboxylic dianhydride represented by Chemical Formula 5 with a tetracarboxylic dianhydride represented by Chemical Formula 7, and 2,2'-bis(trifluoromethyl)benzidine to carry out polymerization.

By polymerizing a tetracarboxylic dianhydride mixture of a tetracarboxylic dianhydride represented by Chemical Formula 5 with a tetracarboxylic dianhydride represented by Chemical Formula 7 and 2,2'-bis(trifluoromethyl)benzidine, a polyamic acid precursor of the polyimide represented by Chemical Formula 8 may be prepared, which may undergo a thermal or chemical imidization to give a polyimide represented by Chemical Formula 8. Alternatively, before completely imidizing the polyamic acid precursor of the polyimide, the polyamic acid precursor solution may be partially imidized prior to casting on a substrate. This alternative procedure may result in a polyimide having further improved properties. Accordingly, if desired, after polymerizing the diamine and the tetracarboxylic dianhydride, the mixture may partially be imidized before casting on a substrate.

According to yet another embodiment, provided is an article prepared from the composition or the polyimide.

The article may be a film, a fiber, a coating material, or an adhesive.

The article may have a light transmittance of greater than about 87% at a wavelength range of from 380 nanometers (nm) to 780 nanometers as a film of about 10 micrometers (µm) thick. Thus, the article can be used in an application requiring a colorless, transparent film, such as, for example, an optical film or coating material.

Further, the article may have a light transmittance for light of greater than or equal to about 80%, for example, greater than or equal to about 84%, at 430 nanometers wavelength as a film of about 10 µm thick.

The article may have a yellowness index (YI) of less than 4%, for example, less than about 3.5%.

The article may have an out-of-plane retardation of less than or equal to about 800 nanometers, for example, less than or equal to 700 nanometers.

The article may have a high glass transition temperature, for example, of greater than or equal to about 310 °C, for example, of greater than or equal to about 320 °C, and may have a high 0.5% weight degradation temperature of greater than or equal to about 400 °C, for example, of greater than or equal to about 410 °C. Thus, the article prepared from the composition of the instant disclosure has good thermal properties.

The article prepared from the composition or from the polymer prepared from the composition according to an embodiment, such as, for example, a film, may have a high transmittance and a low yellowness index, and have a drastically reduced out-of-plane retardation (Rₜₕ). Accordingly, the film may be used as a retardation film in an optical device, such as, for example, a liquid crystal display device. Therefore, when the film is used as a transparent substrate for a display device, the film may also serve as a retardation film, so no additional retardation film would be necessary.

Accordingly, in an embodiment, the article may be an optical film.

The optical film may be prepared by reacting the composition according to an embodiment to prepare a polyimide or a polyamic acid precursor of the polyimide, casting the polyimide or the polyamic acid precursor of the polyimide on a substrate, and curing and extending the polyimide. The method of preparing the film is well known in the art, thus a detailed description is omitted.

According to still another embodiment, provided is a display device including the article.

The display device may be a liquid crystal display device ("LCD"), an organic light emitting diode ("OLED"), a complementary metal-oxide semiconductor ("CMOS"), and the like, but is not limited thereto.

In an embodiment, the display may be an LCD.

Among the display devices, a liquid crystal display (LCD) is described by referring to FIG. 1. FIG. 1 is a cross-sectional view of a liquid crystal display (LCD) in accordance with an embodiment.

Referring to FIG. 1, the liquid crystal display (LCD) includes a thin film transistor array panel 100, a common electrode panel 200 facing the thin film transistor array panel 100, and a liquid crystal layer 3 interposed between the two panels 100 and 200.

First, the thin film transistor array panel 100 will be described.

A gate electrode 124, a gate insulating layer 140, a semiconductor 154, a plurality of ohmic contacts 163 and 165, a source electrode 173 and a drain electrode 175 are sequentially disposed on a substrate 110. The source electrode 173 and the drain electrode 175 are isolated from each other and face each other with the gate electrode 124 disposed between them.

One gate electrode 124, one source electrode 173, and one drain electrode 175 constitute one thin film transistor (TFT) together with the semiconductor 154, and a channel of the thin film transistor is formed in the semiconductor 154 between the source electrode 173 and the drain electrode 175.

A protective layer 180 is disposed on the gate insulating layer 140, the source electrode 173, and the drain electrode 175, and a contact hole 185 that exposes the drain electrode 175 formed in the protective layer 180.

A pixel electrode 191 formed from a transparent conductive material such as ITO or IZO is disposed on the protective layer 180. The pixel electrode 191 is connected to the drain electrode 175 through the contact hole 185.

The common electrode panel 200 will now be described.

In the common electrode panel 200, a lighting member 220 referred to as a black matrix is disposed on a substrate 210, a color filter 230 is disposed on the substrate 210 and the lighting member 220, and a common electrode 270 is formed on the color filter 230.

Herein, the substrates 110 and 210 may be articles including the the polyimide or polyamic acid precursor of the polyimide according to the embodiment.

In a liquid crystal display device, a low out-of-plane retardation may be advantageous, considering the thickness of the liquid crystal. The optical film according to an embodiment may be used as a retardation film in a liquid crystal display device, or a transparent substrate for a liquid crystal display device, which is not limited thereto.

Hereafter, the technology of this disclosure is described in detail with reference to examples. The following examples and comparative examples are not restrictive but are illustrative.

### Examples

### Examples 1-1 to 12 and Comparative Examples 1 to 3: Preparation of a Polyimide Film

### Example 1-1

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.2 g (0.0415 mole) of 2,2'-bis(trifluoromethyl)benzidine (TFDB) is added and dissolved in the NMP, while maintaining the temperature at 25 °C. To the solution, 10.98 g (0.037 mole) of BPDA, and 1.22 g (0.0042 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 1-2

The same process is performed as in Example 1-1, except that the acetic anhydride and pyridine are added in an amount of 80 mole% each, not 60 mole%, based on the total mole number of the amic acids in the prepared polyamic acid, such that 80% of the film is chemically imidized before being cured (thickness of 10 µm).

### Example 2

124 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 11.7 g (0.036 mole) of 2,2'-bis(trifluoromethyl)benzidine (TFDB) is added and dissolved in the NMP, while maintaining the temperature at 25 °C. To the solution, 8.08 g (0.0275 mole) of BPDA, and 2.69 g (0.0092 mole) of a-BPDA are added, and agitated for 48 hours to obtain a polyamic acid solution (solid content of 15 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 3

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.2 g (0.0415 mole) of 2,2'-bis(trifluoromethyl)benzidine (TFDB) is added and dissolved in the NMP, while maintaining the temperature at 25 °C. To the solution, 7.32 g (0.0249 mole) of BPDA, and 4.88 g (0.0166 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 4

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.2 g (0.0415 mole) of 2,2'-bis(trifluoromethyl)benzidine (TFDB) is added and dissolved in the NMP, while maintaining the temperature at 25 °C. To the solution, 6.71 g (0.0228 mole) of BPDA, and 5.49 g (0.0187 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 5

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.2 g (0.0415 mole) of 2,2'-bis(trifluoromethyl)benzidine (TFDB) is added and dissolved in the NMP, while maintaining the temperature at 25 °C. To the solution, 6.1 g (0.0208 mole) of BPDA, and 6.1 g (0.0208 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 6

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.2 g (0.0415 mole) of 2,2'-bis(trifluoromethyl)benzidine (TFDB) is added and dissolved in the NMP, while maintaining the temperature at 25 °C. To the solution, 5.98 g (0.0203 mole) of BPDA, and 6.22 g (0.0212 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 7

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.2 g (0.0415 mole) of 2,2'-bis(trifluoromethyl)benzidine (TFDB) is added and dissolved in the NMP, while maintaining the temperature at 25 °C. To the solution 5.86 g (0.0199 mole) of BPDA, and 6.34 g (0.0216 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Comparative Example 1

125.4 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 10.94 g (0.0342 mole) of 2,2'-bis(trifluoromethyl)benzidine (TFDB) is added and dissolved in the NMP, while maintaining the temperature at 25 °C. To the solution, 10.05 g (0.0342 mole) of BPDA is added, and agitated for 48 hours to obtain a polyamic acid solution (solid content of 14 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 8

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.28 g (0.0415 mole) of 2,2'-bis(trifluoromethyl)benzidine (TFDB) is added and dissolved in the NMP, while maintain the temperature at 25 °C. To the solution, 11.59 g (0.0394 mole) of BPDA, and 0.61 g (0.0021 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 9

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.28 g (0.0415 mole) of 2,2'-bis(trifluoromethyl)benzidine (TFDB) is added and dissolved in the NMP, while maintain the temperature at 25 °C. To the solution, 11.47 g (0.039 mole) of BPDA, and 0.73 g (0.0025 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm_{*µ*m}).

### Example 10

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.28 g (0.0415 mole) of 2,2'-bis(trifluoromethyl)benzidine (TFDB) is added and dissolved in the NMP, while maintaining the temperature at 25 °C. To the solution, 11.1 g (0.0378 mole) of BPDA, and 1.0 g (0.0037 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 11

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.28 g (0.0415 mole) of 2,2'-bis(trifluoromethyl)benzidine (TFDB) is added and dissolved in the NMP, while maintaining the temperature at 25 °C. To the solution, 5.73 g (0.0195 mole) of BPDA, and 6.47 g (0.022 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Example 12

121.1 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.28 g (0.0415 mole) of 2,2'-bis(trifluoromethyl)benzidine (TFDB) is added and dissolved in the NMP, while maintaining the temperature at 25 °C. To the solution, 5.61 g (0.0191 mole) of BPDA, and 6.59 g (0.0224 mole) of a-BPDA are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Comparative Example 2

119.2 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.2 g (0.0415 mole) of 2,2'-bis(trifluoromethyl)benzidine (TFDB) is added and dissolved in the NMP, while maintaining the temperature at 25 °C. To the solution, 10.98 g (0.037 mole) of BPDA, and 0.92 g (0.00415 mole) of HPMDA (1,2,4,5-cyclohexane tetracarboxylic dianhydride) are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Comparative Example 3

122.8 mL of N-methyl-2-pyrrolidone (NMP) is fed in a 250 mL roundbottomed flask equipped with an agitator, an inlet for N₂ gas, and a cooler under N₂ atmosphere, and the temperature is set at 25 °C. Then, 13.2 g (0.0415 mole) of 2,2'-bis(trifluoromethyl)benzidine (TFDB) is added and dissolved in the NMP, while maintaining the temperature at 25 °C. To the solution, 10.87 g (0.037 mole) of BPDA, and 1.8 g (0.00415 mole) of 6FDA (hexafluoroisopropylidene)diphthalic anhydride) are added, and agitated for 48 hours to obtain a polyamic acid solution (solid content of 17 weight%). Then, 60 mol% of acetic anhydride and 60 mol% of pyridine based on the total mole number of the amic acids in the prepared polyamic acid are added to the solution, and agitated for 24 hours to chemically imidize the polyamic acid.

Upon completion of the reaction, the solution is coated on a glass substrate by spin-coating, which is heated on a hot plate at 80 °C for 1 hour, and is introduced into a furnace, where it is heated from room temperature to about 300 °C for 1.5 hours at a heating rate of about 3 °C /min, maintained at 300 °C for 1 hour, and slowly cooled. Then, the polyimide is separated from the glass substrate (thickness of 10 µm).

### Experiment Example 1: Evaluation of Optical Properties of Polyimide Film

Optical properties of the polyimide films according to Examples 1-1 to 12 and Comparative Examples 1-3 are measured and shown in Table 1 below.

In Table 1, the transmittance and YI are measured by using ""KONICA MINOLTA CM3600d Spectrophotometer" produced by Konica Minolta, Inc., in a wavelength range of from 380 nanometers to 780 nanometers.

Further, the Rₜₕ is measured by using "Axoscan".

**Table 1**

| | a-BPDA (mol%) | Trans. @ 380∼780 nm (%) | Trans. @400 nm (%) | Trans. @430 nm (%) | YI | Rₜₕ@10µm (nm) |
|---|---|---|---|---|---|---|
| Example 1-1 | 10 | 87.7 | 60 | 84.3 | 2.6 | 660 |
| Example 2 | 25 | 88.5 | 70.2 | 85.8 | 2.1 | 280 |
| Example 3 | 40 | 88.6 | 67.5 | 84.8 | 2.5 | 80 |
| Example 4 | 45 | 88.6 | 68.2 | 84.2 | 2.5 | 60 |
| Example 5 | 50 | 88.1 | 67.8 | 84.8 | 2.3 | 92 |
| Example 6 | 51 | 89.1 | 66.3 | 85 | 2.8 | 83 |
| Example 7 | 52 | 88.7 | 67.3 | 85.1 | 2.5 | 72 |
| Comparative Example 1 | 0 | 86.6 | 55.8 | 81.7 | 4 | 980 |
| Example 8 | 5 | 87 | 58.8 | 82.6 | 3.5 | 871 |
| Example 9 | 6 | 87 | 60.2 | 83.6 | 2.8 | 1121 |
| Example 10 | 9 | 87 | 61.3 | 83.1 | 3 | 1035 |
| Example 11 | 53 | brittle | - | - | - | - |
| Example 12 | 54 | brittle | - | - | - | - |
| Comparative Example 2 | HPMDA 10 mole% | 85.6 | 46.7 | 76.6 | 7.5 | 900 |
| Comparative Example 3 | 6FDA 10 mole% | 87.7 | 60.5 | 84.6 | 2.5 | 798 |

As shown from Table 1, the polyimide films prepared from the compositions including a tetracarboxylic dianhydride having a tilted dihedral structure according to Examples 1-1 to 7 exhibit transmittance for light greater than 87% at a wavelength range of 380 nm to 780 nm, greater than or equal to 60% at 400 nm, and greater than or equal to 84% at a wavelength of 430 nm. The transmittance values in these Examples are superior to those of the polyimides according to Comparative Example 1, which does not include a tetracarboxylic dianhydride having a tilted dihedral structure, Comparative Example 2, which includes 10 mole% of an aliphatic dianhydride, HPMDA (1,2,4,5-cyclohexane tetracarboxylic dianhydride), instead of a tetracarboxylic dianhydride having a tilted dihedral structure, and Comparative Example 3, which includes 10 mole% of a tetracarboxylic dianhydride having a planar structure, 6FDA, at all wavelength ranges.

Examples 8 to 10 include less than 10 mol% of a-BPDA, and the polyimide films prepared therefrom exhibit lower transmittances for light at 400 nm, as well as for light at a wavelength range of from 380 nm to 780 nm, compared to the polyimide films according to Examples 1-1 to 7.

Meanwhile, the polyimide films prepared from the compositions according to Examples 11 and 12, which include 53 mole% and 54 mole% of a-BPDA, respectively, are too fragile to measure transmittance.

Further, the polyimide films prepared from the compositions according to Examples 1-1 to 7 exhibit low YI of less than 3, compared to the polyimides prepared from Comparative Example 1 including BPDA only, or from Examples 8 to 10 including less than 10 mole% of a-BPDA. The polyimides prepared from the compositions according to Examples 11 and 12, which include 53 mole% and 54 mole% of a-BPDA, respectively, are too fragile to measure yellowness index (YI). The polyimide film prepared from Comparative Example 2 including 10 mole% of an aliphatic dianhydride, HPMDA, instead of a-BPDA, exhibits very high YI.

Meanwhile, the out-of-plane retardation (Rₜₕ) values of the films according to Examples 1-1 to 7 are very low (as low as of 660 nm), compared to the films prepared from the composition according to Comparative Example 2, which does not include a-BPDA, or from the compositions including less than 10 mole% of a-BPDA according to Examples 8 to 10. Specifically, the polyimide films prepared from the compositions according to Examples 2 to 7, which includes greater than or equal to 25 mole% of a-BPDA, exhibit extremely low Rₜₕ of less than 300 nm.

### Experiment Example 2: Thermal Properties of Polyimide Films

Thermal properties of the polyimide films prepared from the Examples and Comparative Examples are measured and shown in Table 2 below.

The glass transition temperature (T_{g}) is measured by using TA Instruments 2980 dynamic mechanical analyzer, employing the collection frequency of 1.0 Hertz (Hz), pre-load weight of 0.05 Newton (N), and heating rate of 5 °C /minute. The T_{g} value is determined as the tanδ response peak.

The coefficient of thermal expansion (CTE) is measured by using "TMA 2940 thermal mechanical analyzer" produced by TA Instruments. CTE is measured at the second scan of the temperature ranges from 50 °C to 250 °C and from 50 °C to 300 °C. In the first scan, shrinkage of the film and water in the film are eliminated, and in the second scan is measured the CTE as the film's essential property. In this case, 0.05 N of fixed tension is employed, and heating rate is 10 °C /min.

**Table 2**

| | a-BPDA (mol%) | CTE (ppm/°C) @ 50∼300 °C | Glass Transition Temperature(Tg)(°C) | Temperature @0.5% Weight Loss(°C) |
|---|---|---|---|---|
| Example 1-1 | 10 | 33 | 325 | 441 |
| Example 2 | 25 | 50 | 333 | 435 |
| Example 3 | 40 | 75 | 329 | 415 |
| Example 4 | 45 | 78 | 330 | 417 |
| Comparative Example 1 | 0 | 19 | 314 | 484 |
| Comparative Example 2 | 10 mole% of HPMDA | 43 | 319 | 389 |

As shown from Table 2, the polyimide films prepared from the compositions according to Examples 1-1 to 4 exhibit glass transition temperatures (T_{g}) of greater than or equal to 320 °C, and 0.5 weight% degradation temperatures (T_{d50}) of greater than or equal to 410 °C, which shows that the films have sufficient high temperature stability.

Meanwhile, there appears to be a tendency that the greater is the amount of a-BPDA, which has a tilted dihedral structure, the higher is the CTE. It is also believed that the polyimide has difficulty forming the CTC (Charge Transfer Complex) due to the tilted dihedral structure. However, as shown from the experimental examples below, CTE may be controlled by the degree of chemical imidization prior to forming films.

### Experiment Example 3: Control of CTE by chemical imidization

While 60% chemical imidization is performed prior to forming films in Examples 1-1 to 7, it has been found that 80% imidization prior to forming a film may reduce CTE by about 20%. A polyimide film is prepared in Example 1-2 in the same manner as in Example 1-1, except that the imidization degree is 80% in Example 1-2, while the imidization degree in Example 1-1 is 60%. The transmittance for light, yellowness index, Rₜₕ, and CTE of the films prepared in Examples 1-1 and 1-2 are measured and shown in Table 3 below.

**Table 3**

| | Trans. @ 380∼780 nm (%) | Trans. @ 400 nm (%) | Trans. @ 430 nm (%) | YI | Rₜₕ @ 10µm (nm) | CTE (ppm/°C) @ 50∼300 °C |
|---|---|---|---|---|---|---|
| Example 1-1 | 87.7 | 60 | 84.3 | 2.6 | 660 | 33 |
| Example 1-2 | 87.5 | 64.4 | 84.3 | 2.6 | 662 | 25 |

As shown from Table 3, CTE may be substantially reduced by controlling the imidization ratio, without deteriorating the other optical or thermal properties.

While this disclosure has been described in connection with what is presently considered to be practical exemplary embodiments, it is to be understood that the present inventive concept is not limited to the disclosed embodiments, but, on the contrary, is intended to cover various modifications and equivalent arrangements included within the scope of the appended claims.

## Claims

1. A composition for preparing a polyimide comprising a tetracarboxylic dianhydride mixture comprising
a tetracarboxylic dianhydride represented by Chemical Formula 5,
a tetracarboxylic dianhydride represented by Chemical Formula 7, and
2,2'-bis(trifluoromethyl)benzidine: 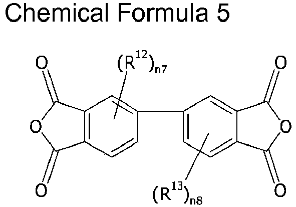 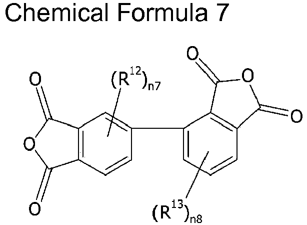 wherein in Chemical Formulae 5 and 7,
R¹² and R¹³ are the same or different and are independently a halogen, a hydroxyl group, a substituted or unsubstituted C1 to C10 aliphatic organic group, a substituted or unsubstituted C6 to C20 aromatic organic group, a group of formula -OR²⁰⁰, wherein R²⁰⁰ is a C1 to C10 aliphatic organic group, or a silyl group of formula -SiR²⁰¹R²⁰²R²⁰³, wherein R²⁰¹, R²⁰², and R²⁰³ are the same or different and are independently a hydrogen or a C1 to C10 aliphatic organic group,
n7 and n8 are the same or different and are independently an integer ranging from 0 to 3, and
wherein the tetracarboxylic dianhydride represented by Chemical Formula 7 is included in an amount of greater than or equal to 25 mole% and less than or equal to 52 mole%, based on the total mole numbers of the tetracarboxylic dianhydride mixture.

2. The composition according to Claim 1, wherein the tetracarboxylic dianhydride represented by Chemical Formula 5 is 3,3',4,4'-biphenyl tetracarboxylic dianhydride, and the tetracarboxylic dianhydride represented by Chemical Formula 7 is 2,3,3',4'-biphenyltetracarboxylic dianhydride.

3. A polyimide represented by Chemical Formula 8, or a polyamic acid precursor of the polyimide: 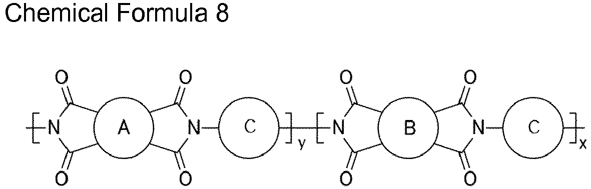 In Chemical Formula 8, 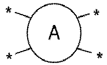 is represented by Chemical Formula 12, 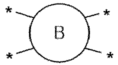 is represented by Chemical Formula 14: 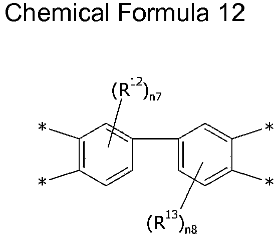 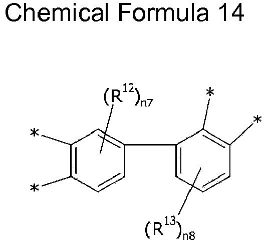 In Chemical Formulae 12 and 14,
R¹² and R¹³ are the same or different and are independently a halogen, a hydroxyl group, a substituted or unsubstituted C1 to C10 aliphatic organic group, a substituted or unsubstituted C6 to C20 aromatic organic group, a group of formula -OR²⁰⁵, wherein R²⁰⁵ is a C1 to C10 aliphatic organic group, or a silyl group of formula -SiR²⁰⁹R²¹⁰R²¹¹, wherein R²⁰⁹, R²¹⁰, and R²¹¹ are the same or different and are independently a hydrogen or a C1 to C10 aliphatic organic group,
n7 and n8 are the same or different and are independently an integer ranging from 0 to 3; 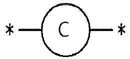 is represented by the chemical formula: 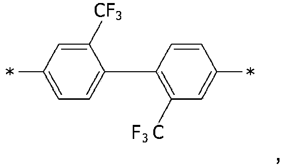 x and y are mole fractions of each structure unit provided that x is 0.25≤x≤0.52, and y is y=1-x.

4. The polyimide or a polyamic acid precursor of the polyimide according to Claim 3, wherein 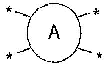 is represented by Chemical Formula 15: 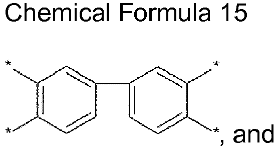 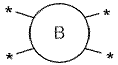 is represented by Chemical Formula 16:

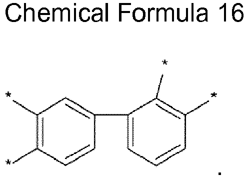

5. An article prepared from the composition according to Claims 1 or 2.

6. The article according to Claim 5, wherein the article is a film, wherein the thickness of the film is about 10 micrometers, and the out-of-plane retardation of the film is less than or equal to 700 nanometers and/or the yellowness index of the film is less than 4%.

7. A display device comprising the article according to Claim 5, such as a liquid crystal display device.

## Patentansprüche

1. Zusammensetzung zur Herstellung eines Polyimids, umfassend eine Tetracarboxyldianhydridmischung, umfassend
ein Tetracarboxyldianhydrid, dargestellt durch die chemische Formel 5,
ein Tetracarboxyldianhydrid, dargestellt durch die chemische Formel 7, und
2,2'-bis(Trifluormethyl)benzidin: 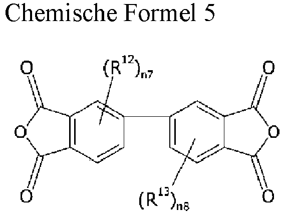 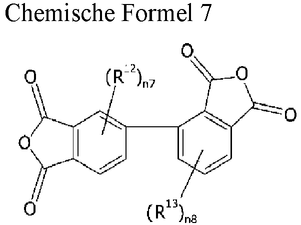 wobei in den chemischen Formeln 5 und 7
R¹² und R¹³ gleich oder unterschiedlich sind und unabhängig ein Halogen, eine Hydroxylgruppe, eine substituierte oder nicht substituierte aliphatische organische C1- bis C10-Gruppe, eine substituierte oder nicht substituierte aromatische organische C6- bis C20-Gruppe, eine Gruppe der Formel -OR²⁰⁰, wobei R²⁰⁰ eine aliphatische organische C1- bis C10-Gruppe ist, oder eine Silylgruppe der Formel -SiR²⁰¹R²⁰²R²⁰³ sind, wobei R²⁰¹, R²⁰² und R²⁰³ gleich oder unterschiedlich sind und unabhängig ein Wasserstoff oder eine aliphatische organische C1- bis C10-Gruppe sind,
n7 und n8 gleich oder unterschiedlich sind und unabhängig eine ganze Zahl sind, die von 0 bis 3 reicht, und
wobei das Tetracarboxyldianhydrid, dargestellt durch die chemische Formel 7, in einer Menge von mehr als oder gleich 25 Mol-% und weniger als oder gleich 52 Mol-% enthalten ist, basierend auf den Gesamtmolzahlen der Tetracarboxyldianhydridmischung.

2. Zusammensetzung nach Anspruch 1, wobei das Tetracarboxyldianhydrid, dargestellt durch die chemische Formel 5, 3,3',4,4'-Biphenyltetracarboxyldianhydrid ist, und das Tetracarboxyldianhydrid, dargestellt durch die chemische Formel 7, 2,3,3',4'-Biphenyltetracarboxyldianhydrid ist.

3. Polyimid, dargestellt durch die chemische Formel 8, oder ein Polyaminsäurevorläufer des Polyimids: 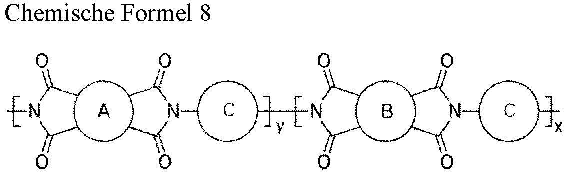 wobei in der Chemischen Formel 8 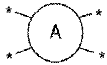 durch die chemische Formel 12 dargestellt ist, 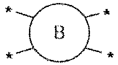 durch die chemische Formel 14 dargestellt ist: 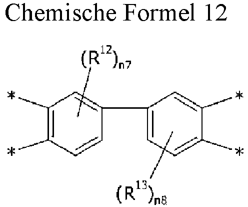 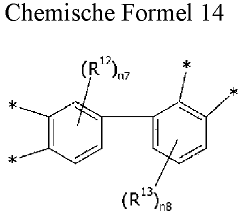 wobei in den chemischen Formeln 12 und 14
R¹² und R¹³ gleich oder unterschiedlich sind und unabhängig ein Halogen, eine Hydroxylgruppe, eine substituierte oder nicht substituierte aliphatische organische C1- bis C10-Gruppe, eine substituierte oder nicht substituierte aromatische organische C6- bis C20-Gruppe, eine Gruppe der Formel -OR²⁰⁵, wobei R²⁰⁵ eine aliphatische organische C1- bis C10-Gruppe ist, oder eine Silylgruppe der Formel -SiR²⁰⁹R²¹⁰R²¹¹ sind, wobei R²⁰⁹, R²¹⁰ und R²¹¹ gleich oder unterschiedlich sind und unabhängig ein Wasserstoff oder eine aliphatische organische C1- bis C10-Gruppe sind,
n7 und n8 gleich oder unterschiedlich sind und unabhängig eine ganze Zahl sind, die von 0 bis 3 reicht; 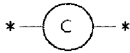 durch die folgende chemische Formel dargestellt ist: 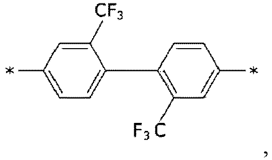 x und y Molanteile jeder Struktureinheit sind, vorausgesetzt, dass x 0,25 ≤ x ≤ 0,52 ist und y y = 1-x ist.

4. Polyimid oder Polyaminsäurevorläufer des Polyimids nach Anspruch 3, wobei 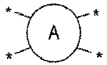 durch die chemische Formel 15 dargestellt ist: 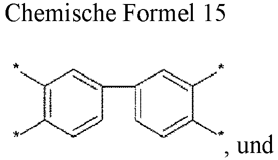 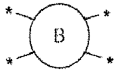 durch die chemische Formel 16 dargestellt ist:

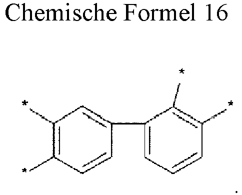

5. Artikel, hergestellt aus der Zusammensetzung nach Anspruch 1 oder 2.

6. Artikel nach Anspruch 5, wobei der Artikel ein Film ist, wobei die Dicke des Films etwa 10 Mikrometer beträgt und die Verzögerung des Films außerhalb der Ebene kleiner als oder gleich 700 Nanometer ist und/oder der Gelbindex des Films weniger als 4 % beträgt.

7. Anzeigevorrichtung, umfassend den Artikel nach Anspruch 5, wie zum Beispiel eine Flüssigkristallanzeigevorrichtung.

## Revendications

1. Composition destinée à préparer un polyimide comprenant un mélange de dianhydrides tétracarboxyliques comprenant
un dianhydride tétracarboxylique représenté par la Formule chimique 5,
un dianhydride tétracarboxylique représenté par la Formule chimique 7, et
une 2,2'-bis(trifluorométhyl)benzidine : 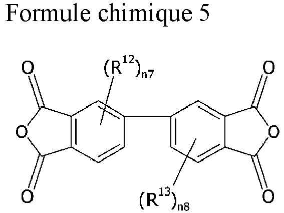 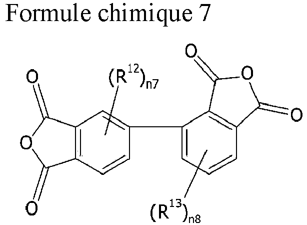 dans laquelle dans les Formules chimiques 5 et 7,
R¹² et R¹³ sont les mêmes ou différents et sont indépendamment un halogène, un groupe hydroxyle, un groupe organique aliphatique en C1 à C10 substitué ou non substitué, un groupe organique aromatique en C6 à C20 substitué ou non substitué, un groupe de formule -OR²⁰⁰, dans laquelle R²⁰⁰ est un groupe organique aliphatique en C1 à C10, ou un groupe silyle de formule -SiR²⁰¹R²⁰²R²⁰³, dans laquelle R²⁰¹, R²⁰², et R²⁰³ sont les mêmes ou différents et sont indépendamment un hydrogène ou un groupe organique aliphatique en C1 à C10,
n7 et n8 sont les mêmes ou différents et sont indépendamment un nombre entier allant de 0 à 3, et
dans laquelle le dianhydride tétracarboxylique représenté par la Formule chimique 7 est inclus dans une quantité supérieure ou égale à 25 % en moles et inférieure ou égale à 52 % en moles, sur la base des nombres totaux de moles du mélange de dianhydrides tétracarboxyliques.

2. Composition selon la revendication 1, dans laquelle le dianhydride tétracarboxylique représenté par la Formule chimique 5 est le dianhydride 3,3',4,4'-biphényltétracarboxylique, et le dianhydride tétracarboxylique représenté par la Formule chimique 7 est le dianhydride 2,3,3',4'-biphényltétracarboxylique.

3. Polyimide représenté par la Formule chimique 8, ou un précurseur à base d'acide polyamique du polyimide : 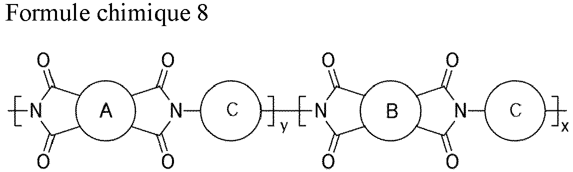 dans la Formule chimique 8, 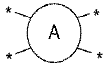 est représenté par la Formule chimique 12, 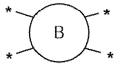 est représenté par la Formule chimique 14: 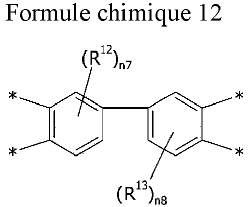 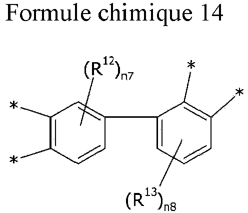 dans les Formules chimiques 12 et 14,
R¹² et R¹³ sont les mêmes ou différents et sont indépendamment un halogène, un groupe hydroxyle, un groupe organique aliphatique en C1 à C10 substitué ou non substitué, un groupe organique aromatique en C6 à C20 substitué ou non substitué, un groupe de formule -OR²⁰⁵, dans lequel R²⁰⁵ est un groupe organique aliphatique en C1 à C10, ou un groupe silyle de formule -SiR²⁰⁹R²¹⁰R²¹¹, dans lequel R²⁰⁹, R²¹⁰, et R²¹¹ sont les mêmes ou différents et sont indépendamment un hydrogène ou un groupe organique aliphatique en C1 à C10,
n7 et n8 sont les mêmes ou différents et sont indépendamment un nombre entier allant de 0 à 3 ; 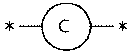 est représenté par la formule chimique : 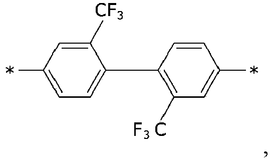 x et y sont les fractions molaires de chaque unité de structure à condition que x soit 0,25 ≤ x ≤ 0,52, et y est y = 1-x.

4. Polyimide ou un précurseur à base d'acide polyamique du polyimide selon la revendication 3, dans lequel 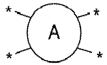 est représenté par la Formule chimique 15 : 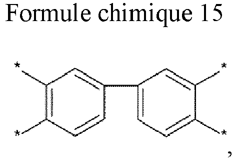 et 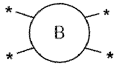 est représenté par la Formule chimique 16 :

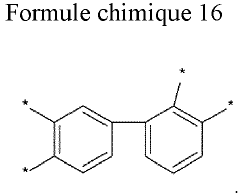

5. Article préparé à partir de la composition selon les revendications 1 ou 2.

6. Article selon la revendication 5, dans lequel l'article est un film, dans lequel l'épaisseur du film est d'environ 10 micromètres, et le retard hors plan du film est inférieur ou égal à 700 nanomètres et/ou l'indice de jaune est inférieur à 4 %.

7. Dispositif d'affichage comprenant l'article selon la revendication 5, tel qu'un dispositif d'affichage à cristaux liquides.
